# EUROPÄISCHE PATENTSCHRIFT

(11) **EP 3 180 503 B1**
(45) Veröffentlichungstag und Bekanntmachung des Hinweises auf die Patenterteilung: **10.10.2018**
(21) Anmeldenummer: 15748178.9
(22) Anmeldetag: 05.08.2015
(51) Int. Cl.: F01P 7/16, F01P 11/16

(54) **VERFAHREN ZUM BETREIBEN EINES FLUIDKREISLAUFS EINES KRAFTFAHRZEUGS SOWIE ENTSPRECHENDER FLUIDKREISLAUF**
METHOD FOR OPERATING A FLUID CIRCUIT OF A MOTOR VEHICLE, AND CORRESPONDING FLUID CIRCUIT
PROCÉDÉ POUR FAIRE FONCTIONNER UN CIRCUIT DE FLUIDE D'UN VÉHICULE AUTOMOBILE ET CIRCUIT DE FLUIDE CORRESPONDANT

(30) Priorität: 13.08.2014 DE 102014012027
(43) Veröffentlichungstag der Anmeldung: 21.06.2017
(73) Patentinhaber: Audi AG, 85045 Ingolstadt (DE)
(72) Erfinder: AGGSTALLER, Josef, 93358 Train (DE); SCHULLER, Dietmar, 93336 Altmannstein (DE); AMMLER, Stefan, 86673 Bergheim (DE)
(74) Vertreter: Lehle, Josef
(86) Internationale Anmeldenummer: PCT/EP2015/001614
(87) Internationale Veröffentlichungsnummer: WO 2016/023625

(56) Entgegenhaltungen:
- DE-A1- 10 161 867
- DE-A1- 19 958 385
- US-A1- 2011 048 390
- US-A1- 2011 120 216

## Beschreibung

Die Erfindung betrifft ein Verfahren zum Betreiben eines Fluidkreislaufs eines Kraftfahrzeugs, der über einen Hauptkreislauf, einen über ein mechanisches Thermostatventil an den Hauptkreislauf angeschlossenen Nebenkreislauf sowie eine elektrische Fluidfördereinrichtung zur Förderung eines Fluids verfügt. Die Erfindung betrifft weiterhin einen Fluidkreislauf für ein Kraftfahrzeug.

Der Fluidkreislauf kann grundsätzlich ein beliebiger Kreislauf des Kraftfahrzeugs sein, in welchem ein Fluid vorliegt. Beispielsweise ist das Fluid ein Hydraulikfluid, ein Kühlmittel oder dergleichen, sodass der Fluidkreislauf insoweit als Hydraulikkreislauf beziehungsweise Kühlkreislauf ausgestaltet ist. Der Fluidkreislauf verfügt in dem hier vorgestellten Ausführungsbeispiel über den Hauptkreislauf, dem die elektrische Fluidfördereinrichtung zugeordnet ist. Letztere dient zur Förderung des Fluids zumindest durch den Hauptkreislauf.

Weiterhin ist dem Fluidkreislauf der Nebenkreislauf zugeordnet. Der Nebenkreislauf ist über das mechanische Thermostatventil an den Hauptkreislauf angeschlossen. Das Thermostatventil ist vorzugsweise derart ausgestaltet, dass es bei einer Isttemperatur des Fluids, welche kleiner ist als eine Schalttemperatur des Thermostatventils, den Nebenkreislauf strömungstechnisch von dem Hauptkreislauf entkoppelt, sodass das von der Fluidfördereinrichtung in dem Hauptkreislauf geförderte Fluid nicht in den Nebenkreislauf gelangen kann. Das Thermostatventil liegt dabei in einem ersten Schaltzustand vor.

Erreicht die Isttemperatur des Fluids jedoch die Schalttemperatur oder übersteigt diese, so soll das Thermostatventil den Nebenkreislauf strömungstechnisch an den Hauptkreislauf anbinden, sodass das von der Fluidfördereinrichtung dem Hauptkreislauf geförderte Fluid auch durch den Nebenkreislauf strömt. Das Thermostatventil liegt dabei in einem zweiten Schaltzustand vor.

Das Thermostatventil arbeitet vorzugsweise vollständig mechanisch, verfügt also nicht über einen elektrischen Aktuator zum Umschalten zwischen den Schaltzuständen. Eine Möglichkeit zur Diagnose eines Thermostatventils wird in der Druckschrift DE 199 58 385 A1 gezeigt. Dabei wird das Verlustmoment einer Brennkraftmaschine erfasst und bei Änderungen gegenüber zu erwartenden Verlustmomenten auf eine Fehlfunktion des Thermostaten geschlossen.

Es ist Aufgabe der Erfindung, ein Verfahren zum Betreiben eines Fluidkreislaufs eines Kraftfahrzeugs vorzuschlagen, welches gegenüber dem Stand der Technik Vorteile aufweist, insbesondere eine einfache und zuverlässige Diagnose des Thermostatventils ermöglicht.

Dies wird erfindungsgemäß mit einem Verfahren mit den Merkmalen des Anspruchs 1 erreicht. Dabei ist vorgesehen, dass in einer Prüfbetriebsart während eines Prüfzeitraums die Fluidfördereinrichtung auf eine bestimmte Prüfdrehzahl eingestellt und die Iststromstärke des von der Fluidfördereinrichtung benötigten Stroms ermittelt wird, wobei bei einer Isttemperatur des Fluids, die kleiner ist als eine Schalttemperatur des Thermostatventils, die Iststromstärke als erster Stromstärkenwert, und bei einer Isttemperatur, die größer ist als die Schalttemperatur, als zweiter Stromstärkenwert abgespeichert werden, wobei auf eine ordnungsgemäße Funktion des Thermostatventils erkannt wird, wenn der zweite Stromstärkenwert größer ist als der erste Stromstärkenwert.

Die Funktion des erfindungsgemäßen Verfahrens beruht im Wesentlichen darauf, dass der Strömungswiderstand des Fluidkreislaufs größer wird, wenn der Nebenkreislauf fluidtechnisch mit dem Hauptkreislauf gekoppelt wird. Solange also das Thermostatventil in seinem ersten Schaltzustand vorliegt und die Fluidfördereinrichtung das Fluid lediglich in dem Hauptkreislauf umwälzt, liegt ein erster Strömungswiderstand vor. Gibt das Thermostatventil in seinem zweiten Schaltzustand die strömungstechnische Verbindung zwischen dem Hauptkreislauf und dem Nebenkreislauf frei, so fördert die Fluidfördereinrichtung das Fluid im Folgenden nicht nur durch den Hauptkreislauf, sondern zusätzlich auch durch den Nebenkreislauf. Insoweit liegt ein zweiter Strömungswiderstand vor, welcher den ersten Strömungswiderstand überschreitet.

Das bedeutet jedoch auch, dass der Strombedarf der Fluidfördereinrichtung zunimmt, sodass die Iststromstärke bei Vorliegen des zweiten Schaltzustands des Thermostatventils größer ist als bei Vorliegen des ersten Schaltzustands. Insoweit ist es vorgesehen, zumindest zwei Stromstärkenwerte zu erfassen und nachfolgend zur Diagnose des Thermostatventils heranzuziehen.

Anstelle des ersten Stromstärkenwerts und des zweiten Stromstärkenwerts können auch ein erstes Wertepaar und ein zweites Wertepaar erfasst werden. Das erste Wertepaar umfasst die Iststromstärke, welche vorliegt, wenn die Isttemperatur des Fluids kleiner ist als die Schalttemperatur des Thermostatventils, also den ersten Stromstärkenwert. Zusätzlich wird jedoch die Isttemperatur in dem ersten Wertepaar abgespeichert. Entsprechend wird die Iststromstärke, entsprechen dem zweiten Stromstärkenwert, in dem zweiten Wertepaar abgespeichert, wenn die Isttemperatur des Fluids größer oder gleich der Schalttemperatur ist. Auch hier wird zusätzlich die Isttemperatur abgespeichert. Liegen beide Wertepaare vor, so können die Iststromstärken, die in ihnen abgespeichert wurden, miteinander verglichen werden.

Insbesondere wird darauf geprüft, ob die Iststromstärke des zweiten Wertepaars größer ist als die Iststromstärke des ersten Wertepaars. Trifft dies zu, so kann auf die ordnungsgemäße Funktion des Thermostatventils erkannt werden. Umgekehrt kann auf einen Defekt des Thermostatventils erkannt werden, wenn die Iststromstärke des zweiten Wertepaars kleiner oder gleich der Iststromstärke des ersten Wertepaars ist.

Das Thermostatventil arbeitet, wie bereits erläutert, mechanisch. Beispielsweise verfügt es insoweit über einen mechanischen Aktuator, welcher in Abhängigkeit von der Isttemperatur des Fluids das Thermostatventil wahlweise in seinen ersten Schaltzustand oder seinen zweiten Schaltzustand bringt. In dem ersten Schaltzustand ist der Nebenkreislauf vollständig von dem Hauptkreislauf entkoppelt. In dem zweiten Schaltzustand gibt das Thermostatventil eine Fluidverbindung zwischen dem Hauptkreislauf und dem Nebenkreislauf wenigstens bereichsweise, insbesondere vollständig, frei. Selbstverständlich können weitere Schaltzustände existieren, in welchen die Strömungsverbindung weiter freigegeben ist als in dem ersten Schaltzustand, jedoch weniger als in dem zweiten Schaltzustand.

Eine weitere Ausgestaltung der Erfindung sieht vor, dass die Fluidfördereinrichtung zeitlich um einen bestimmten Zeitraum vor dem Prüfzeitraum auf die Prüfdrehzahl eingestellt wird. Auf diese Art und Weise soll sichergestellt werden, dass die Fluidfördereinrichtung bereits zu Beginn des Prüfzeitraums bei der Prüfdrehzahl betrieben wird. Der Zeitraum ist insoweit derart gewählt, dass die Fluidfördereinrichtung ausreichend Zeit hat, um von der momentan vorliegenden Drehzahl auf die Prüfdrehzahl zu beschleunigen oder abzubremsen.

Zusätzlich oder alternativ kann es vorgesehen sein, dass die Prüfdrehzahl nach Ablauf eines bestimmten Zeitraums nach dem Prüfzeitraum verringert, insbesondere auf Null gesetzt wird. Die Prüfdrehzahl muss lediglich während des Prüfzeitraums vorliegen. Ist dieser beendet, kann die Prüfdrehzahl im Wesentlichen beliebig gewählt sein. Um eine Energieeinsparung zu erzielen, soll sie daher verringert, besonders bevorzugt auf Null gesetzt werden.

Beispielsweise wird die Solldrehzahl der Fluidfördereinrichtung aus einer Anforderungsdrehzahl und der Prüfdrehzahl ermittelt, wobei die Solldrehzahl gleich der höheren der beiden gesetzt wird. Die Solldrehzahl wird anschließend an der Fluidfördereinrichtung eingestellt, sodass idealerweise die Istdrehzahl mit der Solldrehzahl übereinstimmt. Beispielsweise wird zu diesem Zweck die Fluidfördereinrichtung entsprechend geregelt, also insoweit die Istdrehzahl der Fluidfördereinrichtung auf die Solldrehzahl geregelt. Die Anforderungsdrehzahl ergibt sich beispielsweise aus einem Betriebszustand des Fluidkreislaufs und/oder des Kraftfahrzeugs. Die Anforderungsdrehzahl kann beispielsweise anhand eines Vorgabedrucks ermittelt werden, welcher in dem Fluidkreislauf vorliegen soll, falls dieser als Hydraulikkreislauf ausgestaltet ist.

In einer Weiterbildung der Erfindung ist vorgesehen, dass bei Unterschreiten einer Lokalminimalstromstärke durch die Iststromstärke während des Prüfzeitraums die Lokalminimalstromstärke auf die Iststromstärke gesetzt und die Isttemperatur des Fluids sowie die Stromstärke als erstes Prüfzeitraumwertepaar abgespeichert werden, und dass bei Überschreiten einer Lokalmaximalstromstärke durch die Iststromstärke während des Prüfzeitraums die Lokalmaximalstromstärke auf die Iststromstärke gesetzt und die Isttemperatur des Fluids sowie die Iststromstärke als zweites Prüfzeitraumwertepaar abgespeichert werden. Zu Beginn des Prüfzeitraums werden die Lokalminimalstromstärke und die Lokalmaximalstromstärke zurückgesetzt, beispielsweise die Lokalminimalstromstärke auf einen sehr großen Wert und die Lokalmaximalstromstärke auf einen sehr kleinen Wert, beispielsweise Null. Alternativ kann auch vorgesehen sein, sowohl die Lokalminimalstromstärke als auch die Lokalmaximalstromstärke auf die zu Beginn des Prüfzeitraums vorliegende Iststromstärke zu setzen.

Tritt während des Prüfzeitraums eine Iststromstärke auf, welche die Lokalminimalstromstärke unterschreitet, so soll diese in dem ersten Prüfzeitraumwertepaar festgehalten werden. Zusätzlich soll dies für die Isttemperatur des Fluids geschehen, welche zu dem Zeitpunkt vorliegt, in welchem die Iststromstärke die Lokalminimalstromstärke unterschreitet. Zusammenfassend wird also die Lokalminimalstromstärke der Iststromstärke nachgeführt, sobald diese sie unterschreitet. Die Lokalminimalstromstärke beziffert insoweit die kleinste Iststromstärke, welche während des gesamten Prüfzeitraums vorliegt.

Analoges gilt für die Lokalmaximalstromstärke. Überschreitet die Iststromstärke während des Prüfzeitraums die Lokalmaximalstromstärke, so wird diese auf die Iststromstärke gesetzt. Gleichzeitig werden die Isttemperatur des Fluids sowie die momentan vorliegende Iststromstärke in Form des zweiten Prüfzeitraumwertepaars abgespeichert. Auch die Lokalmaximalstromstärke wird insoweit der Iststromstärke nachgeführt, sodass die Lokalmaximalstromstärke die größte während des Prüfzeitraums auftretende Iststromstärke beziffert.

In einer bevorzugten Ausgestaltung der Erfindung ist es vorgesehen, dass der Prüfzeitraum vorzeitig beendet wird, wenn eine oder mehrere der folgenden Bedingungen erfüllt sind:
- Eine Anforderungsdrehzahl ist von der Prüfdrehzahl verschieden; und/oder
- die Iststromstärke überschreitet einen Stromstärkenschwellenwert; und/oder
- eine Istdrehzahl der Fluidfördereinrichtung weicht mindestens um eine bestimmte Differenzdrehzahl von der Prüfdrehzahl ab; und/oder
- eine Schwankung der Istdrehzahl wird festgestellt; und/oder
- die Differenz aus Lokalmaximalstromstärke und Lokalminimalstromstärke überschreitet einen Differenzschwellenwert; und/oder
- eine Änderung der Isttemperatur wird festgestellt; und/oder
- eine Fahrgeschwindigkeit des Kraftfahrzeugs unterschreitet einen Geschwindigkeitsschwellenwert.

Zusammengefasst soll also die Prüfung abgebrochen beziehungsweise der Prüfzeitraum vorzeitig beendet werden, wenn bestimmte Randbedingungen für die Prüfung nicht mehr gegeben sind. Dabei ist es bevorzugt ausreichend, wenn eine einzige der vorstehenden Bedingungen erfüllt ist. Unter der Anforderungsdrehzahl ist insbesondere eine Drehzahl zu verstehen, welche von einem Steuergerät für den Fluidkreislauf oder eine Brennkraftmaschine des Kraftfahrzeugs vorgegeben wird. Die Dauer des Prüfzeitraums ist vorzugsweise derart gewählt, dass davon ausgegangen werden kann, dass die Isttemperatur des Fluids konstant bleibt. Tritt insoweit dennoch die Änderung der Isttemperatur auf, so soll das vorzeitige Beenden des Prüfzeitraums vorgenommen werden.

In einer weiteren Ausgestaltung der Erfindung ist vorgesehen, dass während eines Gesamtprüfzeitraums mehrere Prüfzeiträume eingeleitet werden, wobei zum Ende des ersten der Prüfzeiträume ein Startwertepaar gleich dem ersten Prüfzeitraumwertepaar gesetzt wird. In der Prüfbetriebsart wird der Gesamtprüfzeitraum durchlaufen. In diesem folgen mehrere Prüfzeiträume aufeinander, wobei in jedem der Prüfzeiträume gemäß den vorstehenden Ausführungen verfahren wird.

Die Prüfzeiträume können zeitlich gesehen unmittelbar aufeinanderfolgen oder voneinander beabstandet sein, beispielsweise um einen konstanten Abstand. Selbstverständlich können die Prüfzeiträume jedoch auch in ungleichmäßigen Abständen aufeinanderfolgen. Unter dem ersten der Prüfzeiträume ist üblicherweise der erste während der Prüfbetriebsart beziehungsweise während des Gesamtprüfzeitraums eingeleitete Prüfzeitraum zu verstehen. Insbesondere ist der erste der Prüfzeiträume der erste nach einem Einschalten einer Zündung des Kraftfahrzeugs durchlaufene, insbesondere vollständig durchlaufene, Prüfzeitraum. Am Ende des ersten der Prüfzeiträume wird das Startwertepaar definiert und dabei gleich dem ersten Prüfzeitraumwertepaar gesetzt, welches für die kleinste Iststromstärke während des Prüfzeitraums abgespeichert wurde, vorzugsweise jedoch nur dann, wenn der Prüfzeitraum vollständig durchlaufen, also nicht vorzeitig beendet wurde.

Eine Weiterbildung der Erfindung sieht vor, dass nach dem Prüfzeitraum bei Unterschreiten einer in einem ersten Globalwertepaar gespeicherten Stromstärke durch die in dem ersten Prüfzeitraumwertepaar gespeicherte Stromstärke das erste Globalwertepaar gleich dem ersten Prüfzeitraumwertepaar gesetzt wird, und/oder dass nach dem Prüfzeitraum bei Überschreiten einer in einem zweiten Globalwertepaar gespeicherten Stromstärke durch die in dem ersten Prüfzeitraumwertepaar gespeicherte Stromstärke das zweite Globalwertepaar gleich dem ersten Prüfzeitraumwertepaar gesetzt wird. Vorzugsweise wird dies lediglich dann vorgenommen, wenn der Prüfzeitraum vollständig durchlaufen, also nicht vorzeitig beendet wurde.

Insoweit werden nach einem vollständigen Durchlaufen des Prüfzeitraums das erste Globalwertepaar und/oder das zweite Globalwertepaar ermittelt. In dem ersten Globalwertepaar soll die global gesehen kleinste Iststromstärke und in dem zweiten Globalwertepaar die global gesehen größte Iststromstärke während der Prüfbetriebsart beziehungsweise des Gesamtprüfzeitraums vorliegen. Entsprechend wird die beschriebene Vorgehensweise insbesondere nach jedem der mehreren Prüfzeiträume, vorzugsweise unmittelbar nach jedem der mehreren Prüfzeiträume, vorgenommen. Unterschreitet die in dem ersten Prüfzeitraumwertepaar gespeicherte Stromstärke die in dem ersten Globalwertepaar gespeicherte Stromstärke, so soll das erste Globalwertepaar gleich dem ersten Prüfzeitraumwertepaar gesetzt werden.

Das bedeutet, dass sowohl die Stromstärke des ersten Globalwertepaars gleich der Stromstärke des ersten Prüfzeitraumwertepaars gesetzt wird, als auch die Temperatur des ersten Globalwertepaars auf die Temperatur des ersten Prüfzeitraumwertepaars. Entsprechend wird für das zweite Globalwertepaar verfahren, wenn nach dem Prüfzeitraum, insbesondere unmittelbar nach dem Prüfzeitraum, die Stromstärke des zweiten Globalwertepaars von der Stromstärke des ersten Prüfzeitraumwertepaars überschritten wird. Vorzugsweise werden selbstverständlich das erste Globalwertepaar und das zweite Globalwertepaar zu Beginn der Prüfbetriebsart beziehungsweise des Gesamtprüfzeitraum initialisiert. Hierzu wird auf die Ausführungen zu der Lokalminimalstromstärke und der Lokalmaximalstromstärke verwiesen.

Es kann zusätzlich oder alternativ vorgesehen sein, dass bei einem Überschreiten der Temperatur des zweiten Globalwertepaars durch die Temperatur des ersten Globalwertepaar das zweite Globalwertepaar gleich dem ersten Globalwertepaar gesetzt wird. Normalerweise ist die Temperatur des ersten Globalwertepaars kleiner als diejenige des zweiten Globalwertepaars. In bestimmten Betriebszuständen kann jedoch der vorstehend genannte Fall eintreten. Um dennoch eine Auswertung zu ermöglichen, soll dann das zweite Globalwertepaar dem ersten Globalwertepaar nachgeführt beziehungsweise diesem gleichgesetzt werden. Insbesondere wird dabei sowohl die Temperatur als auch die Stromstärke des zweiten Globalwertepaars auf die des ersten Globalwertepaars gesetzt. Dies wird beispielsweise unmittelbar nach dem Prüfzeitraum beziehungsweise dem vorstehend beschriebenen Setzen des ersten Globalwertepaars und/oder des zweiten Globalwertepaars auf das erste Prüfzeitraumwertepaar durchgeführt.

Insoweit im Rahmen dieser Beschreibung auf die Stromstärke eines der Wertepaare, insbesondere eines der Prüfzeitraumwertepaare oder eines der Globalwertepaare, oder die Temperatur eines der Wertepaare eingegangen wird, so ist stets die in dem entsprechenden Wertepaar gespeicherte Iststromstärke beziehungsweise Isttemperatur gemeint.

In einer weiteren Ausgestaltung der Erfindung ist vorgesehen, dass nach dem Prüfzeitraum eine Auswertung eingeleitet wird, wenn eine oder mehrere der folgenden Bedingungen erfüllt sind:
- Die Stromstärke des zweiten Globalwertepaars ist um eine bestimmte erste Stromstärkendifferenz größer als die Stromstärke des ersten Globalwertepaars; und/oder
- die Stromstärke des ersten Prüfzeitraumwertepaars ist um eine bestimmte zweite Stromstärkendifferenz kleiner als die Stromstärke des zweiten Globalwertepaars; und/oder
- die Isttemperatur des Fluids ist größer als die Temperatur des zweiten Globalwertepaars; und/oder
- die Temperatur des zweiten Globalwertepaars ist größer als die Temperatur des ersten Globalwertepaars.

Die Auswertung wird vorzugsweise nur dann durchgeführt, wenn der Prüfzeitraum vollständig durchlaufen wurde, also nicht vorzeitig beendet wurde. Es kann ausreichend sein, wenn lediglich eine der Bedingungen zutrifft. Vorzugsweise müssen jedoch mehrere, insbesondere alle der Bedingungen erfüllt sein. Die erste Stromstärkendifferenz und/oder die zweite Stromstärkendifferenz werden aus Erfahrungswerten bestimmt. Dies wird insbesondere derart vorgenommen, dass aus den aufgezeichneten Werten für die Stromstärke und die Temperatur des Fluids zuverlässig ermittelt werden kann, ob das Thermostatventil funktionsfähig ist oder einen Defekt aufweist. Die erste Stromstärkendifferenz und/oder die zweite Stromstärkendifferenz können auch gleich Null gesetzt werden.

Es kann im Rahmen einer Weiterbildung der Erfindung vorgesehen sein, dass zu Beginn der Auswertung ein Auswertungswertepaar gleich dem ersten Prüfzeitraumwertepaar des unmittelbar vorhergegangenen Prüfzeitraums gesetzt wird. Dies ist insbesondere dann der Fall, wenn mehrere Prüfzeiträume durchlaufen wurden, bevor die Auswertung eingeleitet wird. Die Stromstärke und die Temperatur des ersten Prüfzeitraumwertepaars, die in dem der Auswertung unmittelbar vorhergegangenen Prüfzeitraums festgestellt wurden, werden in Form des Auswertungswertepaars festgehalten. Dies wird vorzugsweise nur dann vorgenommen, wenn der Prüfzeitraum vollständig durchlaufen, also nicht vorzeitig beendet, wurde.

Eine weitere Ausgestaltung der Erfindung sieht vor, dass ein Prüfsignal erzeugt wird, wenn eine oder mehrere der folgenden Bedingungen zutreffen:
- t_{S} ≤ t₁ ≤ t₂ ≤ t_{A}, wobei t_{S} die Temperatur des Startwertepaars, t₁ die Temperatur des ersten Prüfzeitraumwertepaars, t₂ die Temperatur des zweiten Prüfzeitraumwertepaars und t_{A} die Temperatur des Auswertungswertepaars ist; und/oder
- die Differenz zwischen der Stromstärke des zweiten Globalwertepaars und der Stromstärke des ersten Globalwertepaars größer als eine bestimmte Globalstromstärkendifferenz ist; und/oder
- die Differenz zwischen der Temperatur des zweiten Globalwertepaars und der Temperatur des ersten Globalwertepaars kleiner als eine bestimmte Globaltemperaturdifferenz ist; und/oder
- die Differenz zwischen der Stromstärke des Startwertepaars und der Stromstärke des ersten Globalwertepaars kleiner als eine bestimmte Startstromstärkendifferenz ist.

Es kann ausreichend sein, wenn lediglich eine der Bedingungen zutrifft, damit das Prüfsignal erzeugt wird. Vorzugsweise müssen dazu jedoch mehrere der Bedingungen, insbesondere alle der Bedingungen, zutreffen. Die erste Bedingung ist eine aufsteigende Temperaturreihe, wobei die Temperaturen des Startwertepaars, des ersten Globalwertepaars, des zweiten Globalwertepaars sowie des Auswertungswertepaars in der genannten Reihenfolge ansteigen oder zumindest gleich bleiben müssen.

Die Globalstromstärkendifferenz, welche zwischen der Stromstärke des zweiten Globalwertepaars und derjenigen des ersten Globalwertepaars vorliegen muss, um das Prüfsignal zu erzeugen, soll derart gewählt werden, dass die Auswertung aussagekräftig ist. Wird die Globalstromstärkendifferenz zu gering gewählt, so kann es während der Diagnose zu einer fälschlichen Erkennung auf eine ordnungsgemäße Funktion oder einen Defekt des Thermostatventils kommen. Umgekehrt darf die Differenz zwischen den Temperaturen des zweiten Globalwertepaars und des ersten Globalwertepaars nicht zu groß sein. Von daher wird die Globaltemperaturdifferenz, welche die genannte Differenz zur Erzeugung des Prüfsignals unterschreiten muss, entsprechend gewählt.

Zusätzlich und/oder alternativ muss die Differenz zwischen den Stromstärken des Startwertepaars und des ersten Globalwertepaars kleiner als die Startstromstärkendifferenz sein. Auch die Startstromstärkendifferenz wird derart gewählt, dass eine zuverlässige Erkennung auf die Funktionsfähigkeit oder den Defekt des Thermostatventils möglich ist. Selbstverständlich kann wenigstens eine der genannten Differenzen, insbesondere mehrere oder alle der genannten Differenzen, auch gleich Null gewählt werden.

In einer Weiterbildung der Erfindung kann es vorgesehen sein, dass auf eine ordnungsgemäße Funktion des Thermostatventils erkannt wird, wenn das Prüfsignal erzeugt wird. In einer derartigen Variante reicht also bereits das Vorliegen des Prüfsignals aus, um die Unterscheidung zwischen Funktionsfähigkeit und Defekt des Thermostatventils vorzunehmen. Auf eine weiter bevorzugte Ausgestaltung wird nachfolgend hingewiesen.

In einer Weiterbildung der Erfindung ist vorgesehen, dass die Startstromstärkendifferenz aus dem Produkt aus einem bestimmten Skalierungsfaktor und einer Differenz zwischen der Temperatur des Startwertepaars und der Temperatur des ersten Globalwertepaars bestimmt wird. Die Startstromstärkendifferenz ergibt sich also aus der Multiplikation des Skalierungsfaktors mit der Differenz. Der Skalierungsfaktor weist dabei eine entsprechende Einheit, nämlich Stromstärke über Temperatur, insbesondere A/°C beziehungsweise A/K, auf.

Es kann in einer weiteren Ausgestaltung der Erfindung vorgesehen sein, dass aus der Isttemperatur zu Beginn des ersten der Prüfzeiträume und der Isttemperatur am Ende eines letzten der Prüfzeiträume ein Gesamttemperaturgradient über der Zeit ermittelt wird. Es wird also ein mittlerer Temperaturgradient über den Gesamtprüfzeitraum ermittelt, wobei der Gesamtprüfzeitraum vorzugsweise mit dem Beginn des ersten der Prüfzeiträume beginnt und mit dem Ende des letzten der Prüfzeiträume endet.

Zusätzlich oder alternativ kann vorgesehen sein, dass zumindest während des wenigstens einen Prüfzeitraums, insbesondere permanent, ein Isttemperaturgradient über der Zeit bestimmt und bei Überschreiten eines Maximaltemperaturgradients durch den Isttemperaturgradient der Maximaltemperaturgradient gleich dem Isttemperaturgradient gesetzt wird. Der Maximaltemperaturgradient entspricht insoweit dem maximalen, während des Prüfzeitraums und/oder während des Gesamtprüfzeitraums auftretenden Isttemperaturgradient über der Zeit. Dazu wird der Maximaltemperaturgradient dem Isttemperaturgradient nachgeführt, sodass der Maximaltemperaturgradient stets dem größten Isttemperaturgradient entspricht.

In einer weiteren Ausgestaltung der Erfindung ist vorgesehen, dass ein zu Beginn des ersten Prüfzeitraums gesetzter Temperaturmerker gelöscht wird, wenn die Isttemperatur während des wenigstens einen Prüfzeitraums zumindest zeitweise kleiner wird. Der Temperaturmerker wird zu Beginn des ersten Prüfzeitraums und/oder zu Beginn des Gesamtprüfzeitraums gesetzt. Wird während des Prüfzeitraums und/oder während des Gesamtprüfzeitraums festgestellt, dass die Isttemperatur zeitweise absinkt, so wird der Temperaturmerker gelöscht. Dies wird vorzugsweise dann durchgeführt, wenn die Isttemperatur um mindestens eine Mindestdifferenz abgesunken ist und/oder mit mindestens einem ' bestimmten Temperaturgradienten absinkt. Sowohl die Mindestdifferenz als auch der Temperaturgradient sind in diesem Fall größer als Null. Beispielsweise beträgt die Mindestdifferenz mindestens 1 K, 2 K, 5 K, 10 K oder 25 K.

Der Temperaturmerker kann auch bereits dann gelöscht werden, wenn die Isttemperatur während des wenigstens einen Prüfzeitraums und/oder während des Gesamtprüfzeitraums zumindest zeitweise konstant bleibt. Anders ausgedrückt wird der Temperaturmerker gelöscht, wenn der vorstehend erläuterte Isttemperaturgradient über der Zeit kleiner als Null ist und/oder gleich Null ist.

In einer weiteren Ausgestaltung der Erfindung ist vorgesehen, dass ein Zusatzsignal erzeugt wird, wenn eine oder mehrere der folgenden Bedingungen erfüllt sind:
- Ein Gesamttemperaturgradient ist kleiner als ein erster Schwellenwert; und/oder
- ein Maximaltemperaturgradient ist kleiner als ein zweiter Schwellenwert; und/oder
- ein Temperaturmerker ist gesetzt; und/oder
- die Anzahl der Prüfzeiträume ist größer als ein Prüfzeitraumschwellenwert.

Hinsicht der Bestimmung des Gesamttemperaturgradients, des Maximaltemperaturgradients, des Temperaturmerkers wird auf die vorstehenden Ausführungen verwiesen. Es kann vorgesehen sein, dass das Zusatzsignal bereits erzeugt wird, wenn lediglich eine einzige der Bedingungen erfüllt ist. Vorzugsweise müssen jedoch mehrere, insbesondere alle der Bedingungen erfüllt sein.

Mithilfe des Temperaturmerkers wird überprüft, ob die Isttemperatur des Fluids während des Prüfzeitraums und/oder des Gesamtprüfzeitraums stetig gestiegen oder zumindest konstant geblieben ist. Bevorzugt ist der Temperaturmerker lediglich dann gesetzt, wenn die Isttemperatur während des Prüfzeitraums und/oder des Gesamtprüfzeitraums stetig gestiegen ist. Mit der Überprüfung auf die Anzahl der Prüfzeiträume, welcher größer als der Prüfzeitraumschwellenwert sein muss, wird verhindert, dass aufgrund einer zu geringen Anzahl an Messwerten für die Iststromstärke und die Isttemperatur eine Beurteilung auf die Funktionsfähigkeit beziehungsweise den Defekt des Thermostatventils vorgenommen wird. Der Prüfzeitraumschwellenwert wird entsprechend derart gewählt, dass eine zuverlässige Prüfung möglich ist. Der erste Schwellenwert und der zweite Schwellenwert werden vorzugsweise derart gesetzt, dass bei Erfüllung der jeweiligen Bedingung eine aussagekräftige Auswertung des Prüfsignals vorgenommen werden kann.

Eine Weiterbildung der Erfindung sieht vor, dass nur dann auf eine ordnungsgemäße Funktion des Thermostatventils erkannt wird, wenn das Prüfsignal und das Zusatzsignal erzeugt werden. Wie bereits vorstehend ausgeführt, kann bereits dann auf die ordnungsgemäße Funktion erkannt werden, wenn lediglich das Prüfsignal erzeugt wird. Dies hat jedoch den Nachteil, dass nicht auf Rahmenbedingungen geprüft wird, welche eine zuverlässige Prüfung anzeigen. Diese Rahmenbedingungen sind jedoch lediglich dann gegeben, wenn auch das Zusatzsignal vorliegt beziehungsweise erzeugt wird. Entsprechend müssen vorzugsweise sowohl das Prüfsignal als auch das Zusatzsignal vorliegen, damit auf die ordnungsgemäße Funktion des Thermostatventils erkannt wird.

In einer weiteren Ausgestaltung der Erfindung kann vorgesehen sein, dass die Prüfbetriebsart eingeleitet wird, wenn eine oder mehrere der folgenden Bedingungen erfüllt sind:
- Die Differenz zwischen einem aktuellen Laufleistungswert und einem Laufleistungsmerker überschreitet einen bestimmten Grenzwert; und/oder
- die Isttemperatur unterschreitet zunächst eine erste Temperaturschwelle und erreicht oder überschreitet sie nachfolgend; und/oder
- die Isttemperatur ist kleiner als eine zweite Temperaturschwelle, die größer als die erste Temperaturschwelle ist.

Der Laufleistungswert kann beispielsweise einer Betriebsdauer des Fluidkreislaufs oder einem Kilometerstand des Kraftfahrzeugs entsprechen. Es kann für das Einleiten der Prüfbetriebsart ausreichend sein, dass lediglich eine einzige der Bedingungen zutrifft. Bevorzugt sollen jedoch mehrere, insbesondere alle der Bedingungen erfüllt sein.

In einer bevorzugten Ausgestaltung der Erfindung ist vorgesehen, dass ein Zähler inkrementiert und/oder auf einen Defekt des Thermostatventils erkannt wird, wenn das Zusatzsignal, nicht jedoch das Prüfsignal erzeugt wird. Das Zusatzsignal zeigt gemäß den vorstehenden Ausführungen an, dass die Randbedingungen für das Durchführen einer zuverlässigen Prüfung erfüllt sind. Insoweit könnte der Defekt des Thermostatventils vorliegen, wenn das Zusatzsignal erzeugt wird, das Prüfsignal jedoch nicht vorliegt. In diesem Fall kann beispielsweise unmittelbar auf den Defekt des Thermostatventils erkannt werden. Zusätzlich oder alternativ kann der Zähler inkrementiert werden.

In einer bevorzugten Ausgestaltung der Erfindung ist vorgesehen, dass auf den Defekt des Thermostatventils erkannt wird, wenn der Zähler einen bestimmten Grenzwert erreicht oder überschreitet. In einer derartigen Ausführungsform soll nicht unmittelbar auf den Defekt des Thermostatventils erkannt werden, wenn das Zusatzsignal vorliegt, das Prüfsignal jedoch nicht. Vielmehr soll zunächst der Zähler inkrementiert werden.. Erreicht oder überschreitet der Zähler jedoch den bestimmten Grenzwert, so kann davon ausgegangen werden, dass das Thermostatventil tatsächlich defekt ist. Entsprechend soll auf dessen Defekt erkannt werden.

Zusätzlich oder alternativ kann vorgesehen sein, dass der Laufleistungsmerker auf den aktuellen Laufleistungswert gesetzt wird, wenn das Zusatzsignal und das Prüfsignal erzeugt werden, oder wenn der Zähler den Grenzwert erreicht oder überschreitet. Durch das Setzen des Laufleistungsmerkers auf den aktuellen Laufleistungswert wird das Durchführen einer erneuten Prüfung, also das erneute Einleiten des Prüfzeitraums und/oder des Gesamtprüfzeitraums, verhindert, bis die Differenz zwischen dem aktuellen Laufleistungswert und dem Laufleistungsmerker erneut den bestimmten Grenzwert überschreitet. Die Prüfung des Thermostatventils wird insoweit erst nach der definierten Laufleistung beziehungsweise nach erneutem Überschreiten des Grenzwerts durchgeführt.

Wird das Prüfsignal erzeugt, das Zusatzsignal jedoch nicht, so liegen die Rahmenbedingungen für die Durchführung einer zuverlässigen Prüfung nicht vor. Entsprechend soll die Prüfung, beispielsweise während eines nachfolgenden Betriebszyklusses, insbesondere eines KL15-Zyklusses, erneut durchgeführt werden. Aus diesem Grund kann das Setzen des Laufleistungsmerkers auf den aktuellen Laufleistungswert unterbleiben, wenn zwar das Prüfsignal, nicht jedoch das Zusatzsignal vorliegt.

Die Erfindung kann zusätzlich oder alternativ auf ein Verfahren zum Betreiben eines Fluidkreislaufs eines Kraftfahrzeugs gerichtet sein, der über einen Hauptkreislauf, einen über ein mechanisches Thermostatventil an den Hauptkreislauf angeschlossenen Nebenkreislauf sowie eine elektrische Fluidfördereinrichtung zur Förderung eines Fluids verfügt. Das Verfahren zeichnet sich dadurch aus, dass bei Unterschreiten einer Lokalminimalstromstärke während des Prüfzeitraums die Lokalminimalstromstärke auf die Iststromstärke gesetzt und die Isttemperatur des Fluids sowie die Iststromstärke als erstes Prüfzeitraumwertepaar abgespeichert werden, und dass bei Überschreiten einer Lokalmaximalstromstärke während des Prüfzeitraums die Lokalmaximalstromstärke auf die Iststromstärke gesetzt und die Isttemperatur des Fluids sowie die Iststromstärke als zweites Prüfzeitraumwertepaar abgespeichert werden. Das Verfahren kann gemäß der Beschreibung ausgestaltet beziehungsweise weitergebildet sein.

Die Erfindung betrifft weiterhin einen Fluidkreislauf für ein Kraftfahrzeug, insbesondere zur Durchführung des Verfahrens gemäß den vorstehenden Ausführungen, wobei der Fluidkreislauf über einen Hauptkreislauf, einen über ein mechanisches Thermostatventil an den Hauptkreislauf angeschlossenen Nebenkreislauf sowie eine elektrische Fluidfördereinrichtung zur Förderung eines Fluids verfügt. Dabei ist vorgesehen, dass der Fluidkreislauf dazu ausgebildet ist, in einer Prüfbetriebsart während eines Prüfzeitraums die Fluidfördereinrichtung auf eine bestimmte Prüfdrehzahl einzustellen und die Iststromstärke des von der Fluidfördereinrichtung benötigten Stroms zu ermitteln, wobei bei einer Isttemperatur des Fluids, die kleiner ist als eine Schalttemperatur des Thermostatventils, die Iststromstärke als erster Stromstärkenwert, und bei einer Isttemperatur, die größer ist als die Schalttemperatur, als zweiter Stromstärkenwert abgespeichert wird, wobei auf eine ordnungsgemäße Funktion des Thermostatventils erkannt wird, wenn der zweite Stromstärkenwert größer ist als der erste Stromstärkenwert.

Auf die Vorteile einer derartigen Ausgestaltung des Fluidkreislaufs beziehungsweise einer derartigen Vorgehensweise wurde bereits hingewiesen. Sowohl der Fluidkreislauf als auch das Verfahren können gemäß den vorstehenden Ausführungen weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung eines Fluidkreislaufs,
- Figur 2: eine schematische Darstellung eines Verfahrens zum Betreiben des Fluidkreislaufs, und
- Figur 3: ein Diagramm, in welchem mehrere Wertepaare, bestehend aus Temperatur und Stromstärke, aufgetragen sind.

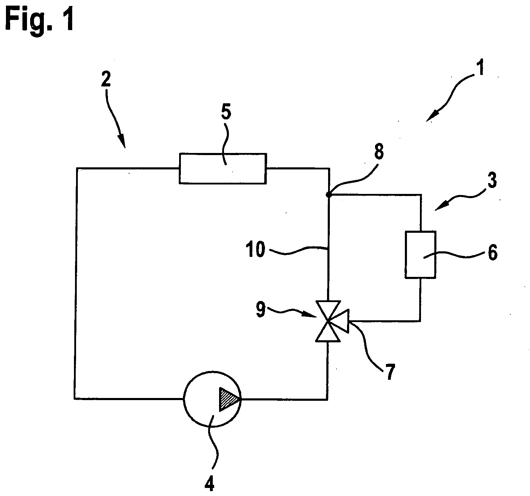

Die Figur 1 zeigt eine schematische Darstellung eines Fluidkreislaufs 1, wie er beispielsweise für ein Kraftfahrzeug eingesetzt wird. Der Fluidkreislauf verfügt über einen Hauptkreislauf 2 sowie einen Nebenkreislauf 3. In dem Hauptkreislauf 2 ist beispielsweise eine elektrische Fluidfördereinrichtung 4, insbesondere in Form einer Pumpe, vorgesehen. Zudem kann in den Hauptkreislauf 2 eine Einrichtung 5 vorliegen, welche mit einem in dem Fluidkreislauf 1 vorliegenden Fluid beaufschlagt wird. Die Einrichtung 5 kann beispielsweise eine Stelleinrichtung eines Automatikgetriebes oder dergleichen sein. Der Fluidkreislauf 1 ist in diesem Fall beispielsweise als Hydraulikkreislauf ausgebildet.

In dem Nebenkreislauf 3 ist vorzugsweise ein Wärmetauscher 6 angeordnet, welcher zur Kühlung des in dem Fluidkreislauf 1 vorliegenden Fluids dient. Der Nebenkreislauf 3 ist an zwei Mündungsstellen 7 und 8 an den Hauptkreislauf 2 angeschlossen. An der Mündungsstelle 7 ist dabei ein Thermostatventil 9 vorgesehen, über welches der Nebenkreislauf 3 an den Hauptkreislauf 2 angeschlossen ist. Selbstverständlich kann das Thermostatventil 9 alternativ auch an der Mündungsstelle 8 vorliegen.

Das Thermostatventil 9 ist als mechanisches Thermostatventil ausgebildet und weist zu diesem Zweck beispielsweise einen hier nicht dargestellten mechanischen Aktuator auf, welcher insbesondere als Wachs-Dehn-Element vorliegt. Das Thermostatventil 9 ist derart ausgestaltet, dass es bei einer Isttemperatur des Fluids, welche kleiner als eine Schalttemperatur des Thermostatventils 9 ist, den Nebenkreislauf 3 vollständig von dem Hauptkreislauf 2 entkoppelt. Entsprechend wird das von der Fluidfördereinrichtung 4 geförderte Fluid der Einrichtung 5 zugeführt, ohne dass es zuvor den Nebenkreislauf 3 passiert hat. Beispielsweise ist zu diesem Zweck zwischen den Mündungsstellen 7 und 8 eine Bypassleitung 10 vorgesehen.

Bei der Isttemperatur des Fluids, die kleiner ist als die Schalttemperatur, liegt das Thermostatventil in einer ersten Schaltstellung vor. In der ersten Schaltstellung ist die Mündungsstelle 8 über die Bypassleitung 10 mit der Mündungsstelle 7 fluidverbunden, während der Nebenkreislauf 3 vollständig von dem Hauptkreislauf 2 entkoppelt ist. Liegt dagegen eine Isttemperatur des Fluids vor, welche der Schalttemperatur entspricht oder diese sogar überschreitet, so stellt sich ein zweiter Schaltzustand des Thermostatventils 9 ein, in welchem wenigstens ein Teil des Fluids ausgehend von der Mündungsstelle 7 den Nebenkreislauf 3 durchströmt und insoweit von der Mündungsstelle 7 hin zu der Mündungsstelle 8 gelangt. Bevorzugt strömt das gesamte Fluid, welches von der Fluidfördereinrichtung 4 gefördert wird, durch den Nebenkreislauf 3. Entsprechend ist das Thermostatventil 9 derart eingestellt, dass das gesamte Fluid von der Mündungsstelle 7 über den Nebenkreislauf 3 und nicht über die Bypassleitung 10 zu der Mündungsstelle 8 gelangt.

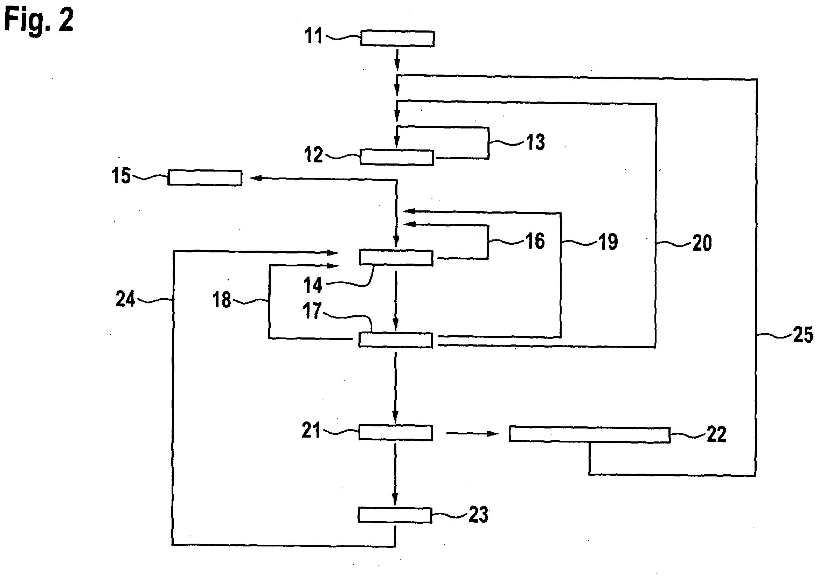

Anhand der Figur 2 wird ein Verfahren zum Betreiben des Fluidkreislaufs 1 beschrieben, mit welchem eine einfache und zuverlässige Prüfung des Thermostatventils 9 auf Funktionsfähigkeit möglich ist. Ein erster Schritt 11 des Verfahrens wird beispielsweise eingeleitet, sobald eine Zündung des Kraftfahrzeugs eingeschaltet wird und insoweit ein KL15-Zyklus beginnt. Anschließend wird in einem Schritt 12 überprüft, ob eine Prüfung des Thermostatventils 9 durchgeführt werden soll. Eine solche Prüfung kann beispielsweise manuell angefordert werden. Zusätzlich oder alternativ kann sie durchgeführt werden, wenn die Differenz zwischen einem aktuellen Laufleistungswert und einem Laufleistungsmerker einen bestimmten Grenzwert überschreitet, und/oder die Isttemperatur zunächst eine erste Temperaturschwelle unterschreitet und sie nachfolgend erreicht oder überschreitet, und/oder die Isttemperatur kleiner ist als eine zweite Temperaturschwelle, die größer als die erste Temperaturschwelle ist.

Vorzugsweise wird entlang des Pfads 13 zu einer erneuten Prüfung in dem Schritt 12 verzweigt, wenn eine oder mehrere der genannten Bedingungen nicht erfüllt sind. Sollte dagegen wenigstens eine, vorzugsweise mehrere, insbesondere alle der Bedingungen erfüllt sein, so wird zu einem Schritt 14 verfahren und parallel ein Schritt 15 eingeleitet. Im Rahmen des Schritts 15 ist es vorgesehen, dass ein Gesamttemperaturgradient über der Zeit sowie ein Maximaltemperaturgradient ermittelt werden. Zudem soll ein Temperaturmerker gesetzt werden. Dieser wird nachfolgend gelöscht, wenn die Isttemperatur des Fluids zumindest zeitweise kleiner wird. Zusätzlich kann der Temperaturmerker auch dann gelöscht werden, wenn die Isttemperatur wenigstens zeitweise konstant bleibt.

Im Rahmen des Schritts 14 wird geprüft, ob eine Fahrgeschwindigkeit des Kraftfahrzeugs einen Geschwindigkeitsschwellenwert überschreitet. Dem Geschwindigkeitsschwellenwert kann dabei ein Hysteresewert zugeschlagen werden, beispielsweise wenigstens 5 km/h. Ist die Bedingung nicht erfüllt, ist das Kraftfahrzeug also langsamer als der Geschwindigkeitsschwellenwert, so wird entlang des Pfads 16 zum Schritt 14 zurückverzweigt und die Prüfung erneut durchgeführt. Ist die Bedingung dagegen erfüllt, wird die Fluidfördereinrichtung 4 auf eine Prüfdrehzahl eingestellt und in einem ersten Prüfzeitraumwertepaar und einem zweiten Prüfzeitraumwertepaar gespeicherte Stromstärken zurückgesetzt. Beispielsweise wird die Stromstärke des ersten Prüfzeitraumwertepaars dabei auf einen sehr großen und die Stromstärke des zweiten Prüfzeitraumwertepaars auf einen sehr kleinen Wert gesetzt. Alternativ können die Stromstärken, zumindest die des ersten Prüfzeitraumwertepaars und des zweiten Prüfzeitraumwertepaars, auch auf die momentane Iststromstärke gesetzt werden.

Anschließend wird der Schritt 17 eingeleitet. In diesem kann zunächst geprüft werden, ob der Prüfzeitraum vorzeitig beendet werden muss. Dazu sind eine oder mehrere der folgenden Bedingungen zu erfüllen: Eine Anforderungsdrehzahl ist von der Prüfdrehzahl verschieden; die Iststromstärke überschreitet einen Stromstärkenschwellenwert; eine Istdrehzahl der Fluidfördereinrichtung 4 weicht mindestens um eine bestimmte Differenzdrehzahl von der Prüfdrehzahl ab; eine Schwankung der Istdrehzahl wird festgestellt; die Differenz aus einer Lokalmaximalstromstärke und einer Lokalminimalstromstärke überschreitet einen Differenzschwellenwert; und/oder es wird eine Änderung der Isttemperatur festgestellt. Trifft wenigstens eine der Bedingungen zu, so wird entlang des Pfads 18 zu dem Schritt 14 zurückverzweigt.

Unterschreitet dagegen die Fahrgeschwindigkeit des Kraftfahrzeugs den Geschwindigkeitsschwellenwert, so kann entlang des Pfads 19 zum Schritt 14 zurückverzweigt werden. Zusätzlich kann es vorgesehen sein, die Prüfdrehzahl zu reduzieren, insbesondere auf Null zu setzen. Überschreitet die Isttemperatur während des Schritts 17 einen bestimmten Schwellenwert, so kann entlang des Pfads 20 zu dem Schritt 12 zurückverzweigt werden.

Während des Schritts 17 wird ein Prüfzeitraum durchgeführt. Während diesem wird die Fluidfördereinrichtung 4 auf die bestimmte Prüfdrehzahl eingestellt und die Iststromstärke des von der Fluidfördereinrichtung 4 benötigten Stroms ermittelt. Bei Unterschreiten einer Lokalminimalstromstärke durch die Iststromstärke während des Prüfzeitraums wird die Lokalminimalstromstärke auf die Iststromstärke gesetzt und die Isttemperatur des Fluids sowie die Iststromstärke als erstes des Prüfzeitraumwertepaars abgespeichert. Analog wird bei Überschreiten der Lokalmaximalstromstärke durch die Iststromstärke während des Prüfzeitraums die Lokalmaximalstromstärke auf die Iststromstärke gesetzt und die Isttemperatur des Fluids sowie die Iststromstärke als zweites Prüfzeitraumwertepaar abgespeichert.

Dies wird bis zum Ende des Prüfzeitraums, also über eine bestimmte Zeitspanne, durchgeführt. Anschließend kann die Prüfdrehzahl reduziert, insbesondere auf Null gesetzt werden, um Energie zu sparen. Unmittelbar nach dem Ende des Prüfzeitraums wird zu dem Schritt 21 verzweigt. In diesem wird bei Unterschreiten einer in einem ersten Globalwertepaar gespeicherten Stromstärke durch die in dem ersten Prüfzeitraumwertepaar gespeicherte Stromstärke das erste Globalwertepaar gleich dem ersten Prüfzeitraumwertepaar gesetzt, und/oder bei Überschreiten einer in einem zweiten Globalwertepaar gespeicherten Stromstärke durch die in dem ersten Prüfzeitraumwertepaar gespeicherte Stromstärke das zweite Globalwertepaar gleich dem ersten Prüfzeitraumwertepaar gesetzt. War der durchgeführte Prüfzeitraum der erste von mehreren Prüfzeiträumen, so wird ein Startwertepaar zudem gleich dem ersten Prüfzeitraumwertepaar gesetzt.

Anschließend wird überprüft, ob eine Auswertung eingeleitet werden soll. Dies ist der Fall, wenn eine oder mehrere der folgenden Bedingungen erfüllt sind: Die Stromstärke des zweiten Globalwertepaars ist um eine bestimmte erste Stromstärkendifferenz größer als die Stromstärke des ersten Globalwertepaars; die Stromstärke des ersten Prüfzeitraumwertepaars ist um eine bestimmte zweite Stromstärkendifferenz kleiner als die Stromstärke des zweiten Globalwertepaars; und/oder die Isttemperatur des Fluids ist größer als die Temperatur des zweiten Globalwertepaars; und/oder die Temperatur des zweiten Globalwertepaars ist größer als die Temperatur des ersten Globalwertepaars. Trifft diese Bedingung zu, so wird zu dem Schritt 22 verzweigt. Ansonsten wird der Schritt 23 eingeleitet, während welchem ein bestimmter Zeitraum abgewartet und anschließend entlang des Pfads 24 zu dem Schritt 14 zurückverzweigt wird. In diesem Fall kann also ein weiterer Prüfzeitraum eingeleitet werden.

In dem Schritt 22 wird die Auswertung der gesammelten Wertepaare durchgeführt. Zunächst wird zu Beginn der Auswertung ein Auswertungswertepaar gleich dem ersten Prüfzeitraumwertepaar des unmittelbar vorhergegangenen Prüfzeitraums gesetzt. Anschließend wird ein Prüfsignal erzeugt, wenn einer oder mehrere der folgenden Bedingungen zutreffen: tₛ ≤ t₁ ≤ t₂ ≤ t_{A}, wobei tₛ die Temperatur des Startwertepaars, t₁ die Temperatur des ersten Globalwertepaars, t₂ die Temperatur des zweiten Globalwertepaars und t_{A} die Temperatur des Auswertungswertepaars ist; die Differenz zwischen der Stromstärke des zweiten Globalwertepaars und der Stromstärke des ersten Globalwertepaars größer als eine bestimmte Globalstromstärkendifferenz ist; die Differenz zwischen der Temperatur des zweiten Globalwertepaars und der Temperatur des ersten Globalwertepaars kleiner als eine bestimmte Globaltemperaturdifferenz ist; und/oder die Differenz zwischen der Stromstärke des Startwertepaars und der Stromstärke des ersten Globalwertepaars kleiner als eine bestimmte Startstromstärkendifferenz ist.

Zudem wird ein Zusatzsignal erzeugt, wenn ein oder mehrere der folgenden Bedingungen erfüllt sind: Ein Gesamttemperaturgradient ist kleiner als ein erster Schwellenwert; ein Maximaltemperaturgradient ist kleiner als ein zweiter Schwellenwert; der Temperaturmerker ist gesetzt; und/oder die Anzahl der Prüfzeiträume ist größer als ein Prüfzeitraumschwellenwert.

Wenn sowohl das Prüfsignal als auch das Zusatzsignal erzeugt werden, so wird auf eine ordnungsgemäße Funktion des Thermostatventils 9 erkannt. Zudem wird der Laufleistungsmerker auf den aktuellen Laufleistungswert gesetzt. Zusätzlich kann ein Zähler zurückgesetzt werden. Liegt dagegen das Zusatzsignal, nicht jedoch das Prüfsignal vor, so wird der Zähler inkrementiert. Überschreitet der Zähler einen bestimmten Grenzwert oder erreicht diesen, so wird auf den Defekt des Thermostatventils erkannt. Zusätzlich kann in diesem Fall der Laufleistungsmerker auf den aktuellen Laufleistungswert gesetzt werden. Liegt nur das Prüfsignal, nicht jedoch das Zusatzsignal vor, so kann zwar davon ausgegangen werden, dass kein Defekt des Thermostatventils 9 vorliegt, allerdings sind ebenso keine ausreichenden Rahmenbedingungen für eine zuverlässige Prüfung gegeben. Entsprechend wird der Laufleistungsmerker nicht aktualisiert, sodass zeitnah ein weiterer Prüfzeitraum eingeleitet werden kann. Nach dem Schritt 22 wird entlang des Pfads 25 zurück zu dem Schritt 12 verzweigt.

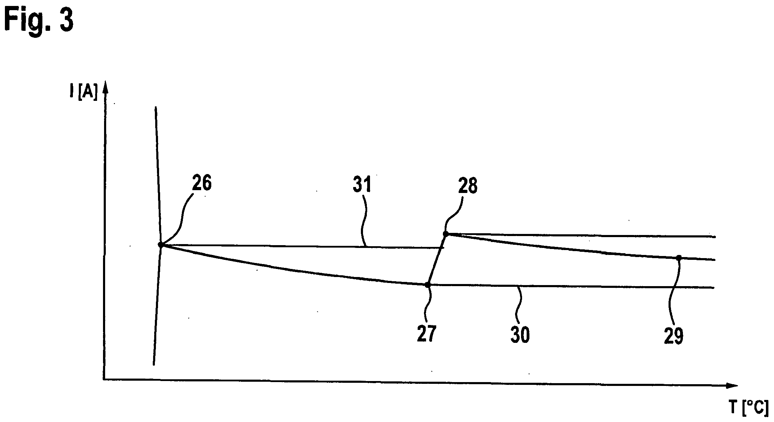

Die Figur 3 zeigt ein Diagramm, in welchem beispielhaft die unterschiedlichen Wertepaare aufgetragen sind. Das Diagramm zeigt dabei die Stromstärke I über der Temperatur T, welche in diesen Wertepaaren gespeichert sind. Das Startwertepaar liegt im Punkt 26, das erste Globalwertepaar in Punkt 27, das zweite Globalwertepaar in Punkt 28 und das Auswertungswertepaar in Punkt 29 vor. Die Linie 30 deutet die in dem ersten Globalwertepaar abgespeicherte Stromstärke über der Temperatur an, während die Linie 31 die in dem zweiten Globalwertepaar gespeicherte Stromstärke über der Temperatur beziehungsweise deren Verlauf wiedergibt.

Es kann vorgesehen sein, dass das zweite Globalwertepaar gleich dem ersten Globalwertepaar gesetzt wird, wenn die Temperatur des zweiten Globalwertepaars kleiner ist als die Temperatur des ersten Globalwertepaars. In diesem Fall kann es vorkommen, dass die Linie 31 bis zu dem Punkt 27 mit der dargestellten Linie 30 zusammenfällt und erst anschließend, also insbesondere ausgehend von dem Punkt 28, in Richtung steigender Temperatur den dargestellten Verlauf aufweist.

Insgesamt soll mithilfe des Verfahrens die Änderung der Iststromstärke über denjenigen Zeitpunkt festgestellt werden, bei welchem die Isttemperatur des Fluids die Schalttemperatur des Thermostatventils 9 erreicht beziehungsweise überschreitet. Insoweit wird bei einer Isttemperatur des Fluids, die kleiner ist als die Schalttemperatur, die Iststromstärke als erster Wert (vorzugsweise entsprechend der Temperatur des ersten Globalwertepaars), und bei einer Isttemperatur, die größer ist als die Schalttemperatur als zweiter Wert (vorzugsweise entsprechend der Temperatur des zweiten Globalwertepaars) abgespeichert. Auf die ordnungsgemäße Funktion des Thermostatventils kann nun grundsätzlich dann erkannt werden, wenn die Stromstärke des zweiten Wertepaars größer ist als die Stromstärke des ersten Wertepaars. Dies ist besonders deutlich anhand der Punkte 27 und 28 in dem Diagramm zu erkennen.

## Patentansprüche

1. Verfahren zum Betreiben eines Fluidkreislauf (1) eines Kraftfahrzeugs, der über einen Hauptkreislauf (2), einen über ein mechanisches Thermostatventil (9) an den Hauptkreislauf (2) angeschlossenen Nebenkreislauf (3) sowie eine elektrische Fluidfördereinrichtung (4) zur Förderung eines Fluids verfügt, **dadurch gekennzeichnet, dass** in einer Prüfbetriebsart während eines Prüfzeitraums die Fluidfördereinrichtung (4) auf eine bestimmte Prüfdrehzahl eingestellt und die Iststromstärke des von der Fluidfördereinrichtung (4) benötigten Stroms ermittelt wird, wobei bei einer Isttemperatur des Fluids, die kleiner ist als eine Schalttemperatur des Thermostatventils (9), die Iststromstärke als erster Stromstärkenwert, und bei einer Isttemperatur, die größer als die Schalttemperatur, als zweiter Stromstärkenwert abgespeichert wird, wobei auf eine ordnungsgemäße Funktion des Thermostatventils (9) erkannt wird, wenn der zweite Stromstärkenwert größer ist als der erste Stromstärkenwert.

2. Verfahren nach Anspruch 1, **dadurch gekennzeichnet, dass** bei Unterschreiten einer Lokalminimalstromstärke durch die Iststromstärke während des Prüfungszeitraums die Lokalminimalstromstärke auf die Iststromstärke gesetzt und die Isttemperatur des Fluids sowie die Iststromstärke als erstes Prüfzeitraumwertepaar abgespeichert werden, und dass bei Überschreiten einer Lokalmaximalstromstärke durch die Iststromstärke während des Prüfzeitraums die Lokalmaximalstromstärke auf die Iststromstärke gesetzt und die Isttemperatur des Fluids sowie die Iststromstärke als zweite Prüfzeitraumwertepaar abgespeichert werden.

3. Verfahren nach einem der vorhergehenden Ansprüche, **dadurch gekennzeichnet, dass** während eines Gesamtprüfzeitraums mehrere Prüfzeiträume eingeleitet werden, wobei zum Ende des ersten der Prüfzeiträume ein Startwertepaar gleich dem ersten Prüfzeitraumwertepaar gesetzt wird.

4. Verfahren nach einem der vorhergehenden Ansprüche, **dadurch gekennzeichnet, dass** nach dem Prüfzeitraum bei Unterschreiten einer in einem ersten Globalwertepaar gespeicherten Stromstärke durch die in dem ersten Prüfzeitraumwertepaar gespeicherte Stromstärke das erste Globalwertepaar gleich dem ersten Prüfzeitraumwertepaar gesetzt wird, und/oder dass nach dem Prüfzeitraum bei Überschreiten einer in einem zweiten Globalwertepaar gespeicherten Stromstärke durch die in dem ersten Prüfzeitraumwertepaar gespeicherte Stromstärke das zweite Globalwertepaar gleich dem ersten Prüfzeitraumwertepaar gesetzt wird.

5. Verfahren nach einem der vorhergehenden Ansprüche, **dadurch gekennzeichnet, dass** nach dem Prüfzeitraum eine Auswertung eingeleitet wird, wenn eine oder mehrere der folgenden Bedingungen erfüllt sind:
- Die Stromstärke des zweiten Globalwertepaars ist um eine bestimmte erste Stromstärkendifferenz größer als die Stromstärke des ersten Globalwertepaars; und/oder
- die Stromstärke des ersten Prüfzeitraumwertepaars ist um eine bestimmte zweite Stromstärkendifferenz kleiner als die Stromstärke des zweiten Globalwertepaars; und/oder
- die Isttemperatur des Fluids ist größer als die Temperatur des zweiten Globalwertepaars; und/oder
- die Temperatur des zweiten Globalwertepaars ist größer als die Temperatur des ersten Globalwertepaars.

6. Verfahren nach einem der vorhergehenden Ansprüche, **dadurch gekennzeichnet, dass** zu Beginn der Auswertung ein Auswertungswertepaar gleich dem ersten Prüfzeitraumwertepaar des unmittelbar vorhergegangenen Prüfzeitraums gesetzt wird.

7. Verfahren nach einem der vorhergehenden Ansprüche, **dadurch gekennzeichnet, dass** ein Prüfsignal erzeugt wird, wenn eine oder mehrere der folgenden Bedingungen zutreffen:
- tₛ ≤ t₁ ≤ t₂ ≤ t_{A}, wobei tₛ die Temperatur des Startwertepaars, t₁ die Temperatur des ersten Globalwertepaars, t₂ die Temperatur des zweiten Globalwertepaars und t_{A} die Temperatur des Auswertungswertepaars ist; und/oder
- die Differenz zwischen der Stromstärke des zweiten Globalwertepaars und der Stromstärke des ersten Globalwertepaars größer als eine bestimmte Globalstromstärkendifferenz ist; und/oder
- die Differenz zwischen der Temperatur des zweiten Globalwertepaars und der Temperatur des ersten Globalwertepaars kleiner als eine bestimmte Globaltemperaturdifferenz ist; und/oder
- die Differenz zwischen der Stromstärke des Startwertepaars und der Stromstärke des ersten Globalwertepaars kleiner als eine bestimmte Startstromstärkendifferenz ist.

8. Verfahren nach einem der vorhergehenden Ansprüche, **dadurch gekennzeichnet, dass** ein Zusatzsignal erzeugt wird, wenn eine oder mehrere der folgenden Bedingungen erfüllt sind:
- Ein Gesamttemperaturgradient ist kleiner als ein erster Schwellenwert; und/oder
- ein Maximaltemperaturgradient ist kleiner als ein zweiter Schwellenwert; und/oder
- ein Temperaturmerker ist gesetzt; und/oder
- die Anzahl der Prüfzeiträume ist größer als ein Prüfzeitraumschwellenwert.

9. Verfahren nach einem der vorhergehenden Ansprüche, **dadurch gekennzeichnet, dass** nur dann auf eine ordnungsgemäße Funktion des Thermostatventils (9) erkannt wird, wenn das Prüfsignal und das Zusatzsignal erzeugt werden.

10. Fluidkreislauf (1) für ein Kraftfahrzeug, insbesondere zur Durchführung des Verfahrens nach einem oder mehreren der vorhergehenden Ansprüche, wobei der Fluidkreislauf (1) über einen Hauptkreislauf (2), einen über ein mechanisches Thermostatventil (9) an den Hauptkreislauf (2) angeschlossenen Nebenkreislauf (3) sowie eine elektrische Fluidfördereinrichtung (4) zur Förderung eines Fluids verfügt, **dadurch gekennzeichnet, dass** der Fluidkreislauf (1) dazu ausgebildet ist, in einer Prüfbetriebsart während eines Prüfzeitraums die Fluidfördereinrichtung (4) auf eine bestimmte Prüfdrehzahl einzustellen und die Iststromstärke des von der Fluidfördereinrichtung (4) benötigten Stroms zu ermitteln, wobei bei einer Isttemperatur des Fluids, die kleiner ist als eine Schalttemperatur des Thermostatventils (9), die Iststromstärke als erster Stromstärkenwert, und bei einer Isttemperatur, die größer ist als die Schalttemperatur, als zweiter Stromstärkenwert abgespeichert wird, wobei auf eine ordnungsgemäße Funktion des Thermostatventils (9) erkannt wird, wenn der zweite Stromstärkenwert größer ist als der erste Stromstärkenwert.

## Claims

1. A method for operating a fluid circuit (1) of a motor vehicle, which fluid circuit has a main circuit (2), a secondary circuit (3) connected to the main circuit (2) by means of a mechanical thermostatic valve (9), and an electric fluid-conveying device (4) for conveying a fluid, **characterised in that** in a test operating mode during a testing time period, the fluid-conveying device (4) is set to a certain test rotational speed and the actual current intensity required by the fluid-conveying device (4) is determined, wherein the actual current intensity is stored as a first current intensity value in the case of an actual temperature of the fluid that is less than a switching temperature of the thermostatic valve (9) and is stored as a second current intensity value in the case of an actual temperature that is greater than the switching temperature, wherein proper function of the thermostatic valve (9) is recognised if the second current intensity value is greater than the first current intensity value.

2. The method according to claim 1, **characterised in that** when a local minimum current intensity is dropped below by the actual current intensity during the testing time period, the local minimum current intensity is set to the actual current intensity, and the actual temperature of the fluid and the actual current intensity are stored as a first testing time period value pair, and **in that** when a local maximum current intensity is exceeded by the actual current intensity during the testing time period, the local maximum current intensity is set to the actual current intensity, and the actual temperature of the fluid and the actual current intensity are stored as a second testing time period value pair.

3. The method according to any one of the preceding claims, **characterised in that** a plurality of testing time periods can be initiated during a total testing time period, wherein at the end of the first testing time period, a start value pair is set equal to the first testing time period value pair.

4. The method according to any one of the preceding claims, **characterised in that** after the testing time period, in the event of dropping below a current intensity stored in a first global value pair by the current intensity stored in the first testing time period value pair, the first global value pair is set equal to the testing time period value pair, and/or **in that** after the testing time period, in the event of exceeding of a current intensity stored in a second global value pair by the current intensity stored in the first testing time period value pair, the second global value pair is set equal to the first testing time period value pair.

5. The method according to any one of the preceding claims, **characterised in that** after the testing time period an evaluation is initiated if one or more of the following conditions are met:
- the current intensity of the second global value pair is greater than the current intensity of the first global value pair by a specific first current intensity difference; and/or
- the current intensity of the first global value pair is less than the current intensity of the second global value pair by a specific second current intensity difference; and/or
- the actual temperature of the fluid is greater than the temperature of the second global value pair; and/or
- the temperature of the second global value pair is greater than the temperature of the first global value pair.

6. The method according to any one of the preceding claims, **characterised in that** at the beginning of the evaluation, an evaluation value pair is set equal to the first testing time period value pair of the immediately preceding testing time period.

7. The method according to any one of the preceding claims, **characterised in that** a test signal is generated if one or more of the following conditions are met:
- tₛ ≤ t₁ ≤ t₂ ≤ t_{A}, where tₛ is the temperature of the start value pair, t₁ is the temperature of the first global value pair, t₂ is the temperature of the second global value pair and t_{A} is the temperature of the evaluation value pair; and/or
- the difference between the current intensity of the second global value pair and the current intensity of the first global value pair is greater than a specific global current intensity difference; and/or
- the difference between the temperature of the second global value pair and the temperature of the first global value pair is less than a specific global temperature difference; and/or
- the difference between the current intensity of the start value pair and the current intensity of the first global value pair is less than a specific start current intensity difference.

8. The method according to any one of the preceding claims, **characterised in that** an additional signal is generated if one or more of the following conditions is met:
- a total temperature gradient is less than a first threshold value; and/or
- a maximum temperature gradient is less than a second threshold value; and/or
- a temperature flag is set; and/or
- the number of testing time periods is greater than a testing time period threshold value.

9. The method according to any one of the preceding claims, **characterised in that** a proper functioning of the thermostat valve (9) is only recognised if the test signal and the additional signal generated.

10. A fluid circuit (1) for a motor vehicle, in particular for carrying out the method according to one or more of the preceding claims, wherein the fluid circuit (1) has a main circuit (2), a secondary circuit (3) connected to the main circuit (2) by means of a mechanical thermostatic valve (9), and an electric fluid-conveying device (4) for conveying a fluid, **characterised in that** the fluid circuit (1) is designed, in a test operating mode during a testing time period, to set the fluid-conveying device (4) to a certain test rotational speed and to determine the actual current intensity required by the fluid-conveying device (4), wherein the actual current intensity is stored as a first current intensity value in the case of an actual temperature of the fluid that is less than a switching temperature of the thermostatic valve (9) and is stored as a second current intensity value in the case of an actual temperature that is greater than the switching temperature, wherein proper function of the thermostatic valve (9) is recognised if the second current intensity value is greater than the first current intensity value.

## Revendications

1. Procédé de fonctionnement d'un circuit de fluide (1) d'un véhicule automobile, lequel circuit de fluide dispose d'un circuit principal (2), d'un circuit auxiliaire (3) raccordé au circuit principal (2) par l'intermédiaire d'une soupape thermostatique (9) mécanique ainsi que d'un dispositif de transport de fluide (4) électrique destiné au transport d'un fluide,
**caractérisé en ce que,** dans un mode de fonctionnement de test, on règle le dispositif de transport de fluide (4) pendant un intervalle de temps de test sur une vitesse de rotation de test spécifiée et on détermine l'intensité de courant réelle du courant nécessaire au dispositif de transport de fluide (4),
dans lequel, en présence d'une température réelle du fluide qui est inférieure à une température de commutation de la soupape thermostatique (9), l'intensité de courant réelle est mémorisée en tant que première valeur d'intensité de courant et, en présence d'une température réelle qui est supérieure à la température de commutation, l'intensité de courant réelle est mémorisée en tant que deuxième valeur d'intensité de courant, un fonctionnement normal de la soupape thermostatique (9) étant constaté lorsque la deuxième valeur d'intensité de courant est supérieure à la première valeur d'intensité de courant.

2. Procédé selon la revendication 1, **caractérisé en ce que,** lorsque l'intensité de courant réelle devient inférieure à une intensité de courant minimale locale pendant l'intervalle de temps de test, l'intensité de courant minimale locale est posée égale à l'intensité de courant réelle et la température réelle du fluide ainsi que l'intensité de courant réelle sont mémorisées en tant que premier couple de valeurs d'intervalle de temps de test et **en ce que**, lorsque l'intensité de courant réelle devient supérieure à une intensité de courant maximale locale pendant l'intervalle de temps de test, l'intensité de courant maximale locale est posée égale à l'intensité de courant réelle et la température réelle du fluide ainsi que l'intensité de courant réelle sont mémorisées en tant que deuxième couple de valeurs d'intervalle de temps de test.

3. Procédé selon l'une quelconque des revendications précédentes, **caractérisé en ce que,** pendant un intervalle de temps de test total, plusieurs intervalles de temps de test sont déclenchés et, à la fin du premier des intervalles de temps de test, un couple de valeurs de départ est posé égal au premier couple de valeurs d'intervalle de temps de test.

4. Procédé selon l'une quelconque des revendications précédentes, **caractérisé en ce que,** après l'intervalle de temps de test, lorsque l'intensité de courant mémorisée dans le premier couple de valeurs d'intervalle de temps de test devient inférieure à une intensité de courant mémorisée dans un premier couple de valeurs globales, le premier couple de valeurs globales est posé égal au premier couple de valeurs d'intervalle de temps de test et/ou **en ce que**, après l'intervalle de temps de test, lorsque l'intensité de courant mémorisée dans le premier couple de valeurs d'intervalle de temps de test devient supérieure à une intensité de courant mémorisée dans un deuxième couple de valeurs globales, le deuxième couple de valeurs globales est posé égal au premier couple de valeurs d'intervalle de temps de test.

5. Procédé selon l'une quelconque des revendications précédentes, **caractérisé en ce que,** après l'intervalle de temps de test, on déclenche une évaluation si une ou plusieurs des conditions suivantes sont satisfaites :
- l'intensité de courant du deuxième couple de valeurs globales est supérieure d'une première différence d'intensité de courant spécifiée à l'intensité de courant du premier couple de valeurs globales ; et/ou
- l'intensité de courant du premier couple de valeurs d'intervalle de temps de test est inférieure d'une deuxième différence d'intensité de courant spécifiée à l'intensité de courant du deuxième couple de valeurs globales ; et/ou
- la température réelle du fluide est supérieure à la température du deuxième couple de valeurs globales ; et/ou
- la température du deuxième couple de valeurs globales est supérieure à la température du premier couple de valeurs globales.

6. Procédé selon l'une quelconque des revendications précédentes, **caractérisé en ce que,** au début de l'évaluation, on pose un couple de valeurs d'évaluation égal au premier couple de valeurs d'intervalle de temps de test de l'intervalle de temps de test immédiatement précédent.

7. Procédé selon l'une quelconque des revendications précédentes, **caractérisé en ce qu'on** produit un signal de test si une ou plusieurs des conditions suivantes sont satisfaites :
- t_{S} ≤ t₁ ≤ t₂ ≤ t_{A}, t_{S} étant la température du couple de valeurs de départ, t₁ la température du premier couple de valeurs globales, t₂ la température du deuxième couple de valeurs globales et t_{A} la température du couple de valeurs d'évaluation ; et/ou
- la différence entre l'intensité de courant du deuxième couple de valeurs globales et l'intensité de courant du premier couple de valeurs globales est supérieure à une différence d'intensité de courant globale spécifiée ; et/ou
- la différence entre la température du deuxième couple de valeurs globales et la température du premier couple de valeurs globales est inférieure à une différence de température globale spécifiée ; et/ou
- la différence entre l'intensité de courant du couple de valeurs de départ et l'intensité de courant du premier couple de valeurs globales est inférieure à une différence d'intensité de courant de départ spécifiée.

8. Procédé selon l'une quelconque des revendications précédentes, **caractérisé en ce qu'**on produit un signal supplémentaire si une ou plusieurs des conditions suivantes sont satisfaites :
- un gradient de température total est inférieur à une première valeur de seuil ; et/ou
- un gradient de température maximal est inférieur à une deuxième valeur de seuil ; et/ou
- un indicateur de température est affecté ; et/ou
- le nombre des intervalles de temps de test est supérieur à une valeur de seuil d'intervalles de temps de test.

9. Procédé selon l'une quelconque des revendications précédentes, **caractérisé en ce qu'**on ne constate un fonctionnement normal de la soupape thermostatique (9) que si le signal de test et le signal supplémentaire sont produits.

10. Circuit de fluide (1) pour un véhicule automobile, en particulier pour la mise en oeuvre du procédé selon une ou plusieurs des revendications précédentes,
lequel circuit de fluide (1) dispose d'un circuit principal (2), d'un circuit auxiliaire (3) raccordé au circuit principal (2) par l'intermédiaire d'une soupape thermostatique (9) mécanique ainsi que d'un dispositif de transport de fluide (4) électrique destiné au transport d'un fluide,
**caractérisé en ce que** le circuit de fluide (1) est conçu pour, dans un mode de fonctionnement de test, régler le dispositif de transport de fluide (4) pendant un intervalle de temps de test sur une vitesse de rotation de test spécifiée et déterminer l'intensité de courant réelle du courant nécessaire au dispositif de transport de fluide (4),
dans lequel, en présence d'une température réelle du fluide qui est inférieure à une température de commutation de la soupape thermostatique (9), l'intensité de courant réelle est mémorisée en tant que première valeur d'intensité de courant et, en présence d'une température réelle qui est supérieure à la température de commutation, l'intensité de courant réelle est mémorisée en tant que deuxième valeur d'intensité de courant, un fonctionnement normal de la soupape thermostatique (9) étant constaté lorsque la deuxième valeur d'intensité de courant est supérieure à la première valeur d'intensité de courant.
